# FASCICULE DE BREVET EUROPEEN

(11) **EP 1 089 527 B1**
(45) Date de publication et mention de la délivrance du brevet: **18.11.2009**
(21) Numéro de dépôt: 00402616.7
(22) Date de dépôt: 21.09.2000
(51) Int. Cl.: H04M 1/725

(54) **Téléphone pouvant restituer de la musique**
Telefon zur Wiedergabe von Musik
Telephone capable of reproducing music

(30) Priorité: 29.09.1999 FR 9912131
(43) Date de publication de la demande: 04.04.2001
(73) Titulaire: Sagem Mobiles, 75015 Paris (FR)
(72) Inventeur: Rieul, François, 78100 Saint Germain en Laye (FR)
(74) Mandataire: Bloch, Gérard

(56) Documents cités:
- WO-A-99/43136
- US-A- 5 572 442

## Description

La présente invention concerne un appareil portable réunissant les fonctions d'un combiné de radiotéléphonie cellulaire et d'un baladeur de lecture audio et/ou de réception radio.

Un baladeur permet à son porteur, même lorsqu'il se déplace, d'écouter ses disques préférés au moyen d'un lecteur d'une mémoire telle que disque CD.

Par ailleurs, un combiné cellulaire comme décrit dans le document WO 99 43 136, par exemple du réseau GSM, permet de communiquer avec des correspondants.

Comme ces appareils portables doivent présenter un volume minimal, on peut songer à rassembler dans un même boîtier un baladeur et un combiné de radiotéléphonie. Cependant le volume et le coût de matériel restent importants et l'autonomie en énergie électrique reste donc limitée.

La présente invention vise à réduire ces inconvénients.

A cet effet, l'invention concerne un appareil portable comme revendiqué dans la revendication 1.

Ainsi, les moyens de traitement des données numériques servent aussi bien aux moyens radio, en cas de communication, pour traiter les signaux numériques transmis à travers le réseau cellulaire, en général sous forme comprimée, qu'aux moyens de lecture pour, en dehors des tâches radio, restituer des séquences sonores et permettre d'utiliser l'appareil en baladeur.

On notera que l'appareil revendiqué dans cette demande peut ne pas comporter les moyens mémoires, ceux-ci étant éventuellement amovibles.

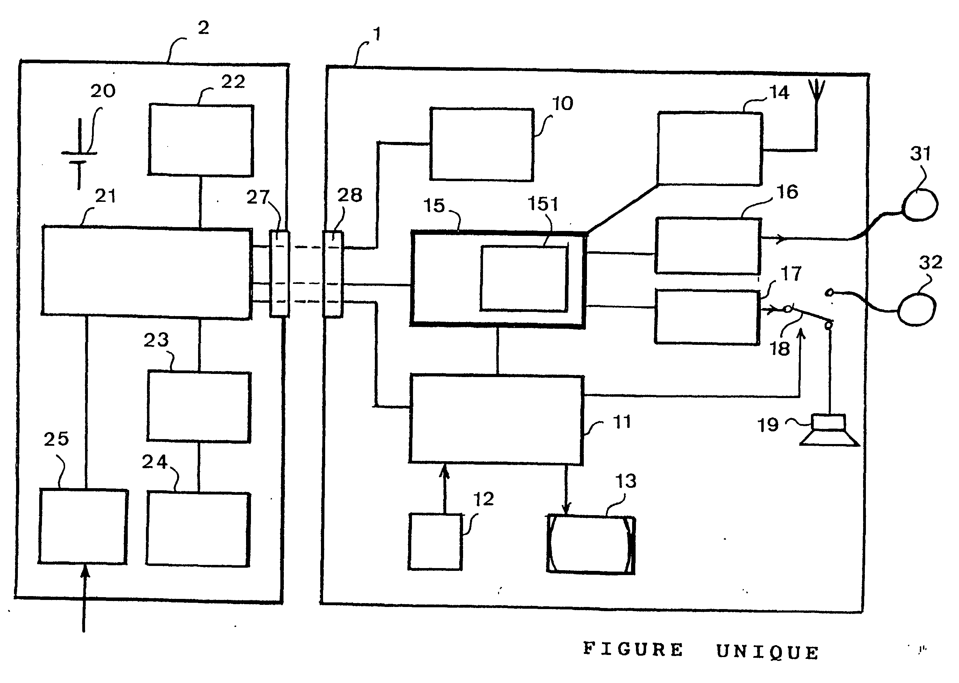

L'invention sera mieux comprise à l'aide de la description suivante d'une forme de réalisation préférée de l'appareil portable de l'invention, en référence à la figure unique annexée.

L'appareil portable représenté, un combiné-baladeur, comporte des circuits de radiotéléphonie cellulaire numérique 11 à 14, des circuits 23 de lecture d'une mémoire 24 contenant des données numériques comprimées, à restituer de façon sonore, et des circuits 15 à 18 de traitement de données numériques agencés pour, en partage de temps, traiter des données numériques des circuits de radiotéléphonie cellulaire 11 à 14 et décomprimer les données numériques lues par les circuits de lecture, ou lecteur, 23, afin de restituer les données numériques de la mémoire 24.

L'appareil est constitué dans cet exemple par deux ensembles séparables 1, 2, représentés à distance l'un de l'autre. L'ensemble 1 comporte un boîtier et des circuits de combiné de radiotéléphonie cellulaire, ici GSM, et l'ensemble 2 est un bloc amovible comportant une batterie 20 d'alimentation de l'ensemble de l'appareil 1, 2 et un connecteur 27 apparié à un connecteur 28 de l'ensemble 1.

L'ensemble 1 comporte une base de temps 10, ou circuits d'horloge, reliée aux divers circuits représentés par des liaisons non dessinées, et un microprocesseur 11 relié à un clavier 12 et commandant un afficheur 13. Un processeur 15 de traitement numérique de signaux, relié au microprocesseur 11 et à des circuits radio GSM 14 d'échange de paquets, commande deux convertisseurs numérique/analogique 16 et 17. Le convertisseur 16 commande un écouteur personnel 31, ou oreillette, et le convertisseur 17 commande de même un écouteur personnel 32 à travers un contact d'un relais inverseur 18, commandé par le microprocesseur 11 pour aiguiller au besoin la sortie du CNA 17 vers un haut-parleur de radiotéléphonie 19. Un microphone, relié au circuit radio 14, n'a pas été représenté. Le processeur 15 comporte des circuits 151 de commutation de partage de temps, pour affecter le reste des circuits du processeur 15 à la radiotéléphonie ou à la restitution sonore des données en mémoire 24.

Les circuits de base de temps 10, le microprocesseur 11 et le processeur 15 sont reliés à un microprocesseur 21 du bloc amovible 2 à travers- les connecteurs 27 et 28, les liaisons en pointillés entre les deux connecteurs 27, 28 schématisant les connexions établies lorsqu'ils sont réunis. Les liaisons d'alimentation à travers les connecteurs 27, 28 n'ont pas été représentées.

Le microprocesseur 21 est relié à une mémoire 22 de programme et de données et gère le lecteur 23.

Dans cet exemple, le lecteur 23 permet d'adresser la mémoire 24 non seulement en lecture mais aussi en écriture, pour y stocker des séquences sonores à restituer plus tard. A cet effet, il est prévu un circuit 25 de liaison avec l'extérieur de l'appareil, circuit 25 situé ici dans le bloc 2 et relié au lecteur 23 par le microprocesseur 21. En variante, le circuit 25 pourrait être situé dans l'ensemble 1, en étant relié au microprocesseur 21 par le microprocesseur 11. Les circuits radio 14 permettent de recevoir de même des données de séquences sonores et de les transmettre au lecteur 23 pour les stocker en mémoire 24.

Les circuits de liaison 25 se raccordent à un PC, local ou distant, qui effectue la compression de données numériques de signal sonore, tel que musique, à stocker en mémoire 24, ces données provenant par exemple de serveurs de l'Internet auxquels s'est relié le PC.

Les circuits radio 14 permettent de même de se relier à de tels serveurs. Il peut encore être prévu un récepteur de programmes radiodiffusés, pour les enregistrer, le processeur 15 effectuant alors la compression des données de programmes ainsi reçus et les transmettant au lecteur 23, fonctionnant alors en enregistreur.

La mémoire 24 est ici amovible et se présente sous la forme d'un mini-boîtier ou cartouche à puce électronique, à mémoire morte ou vive (PROM, EPROM et autres), qui est reçu dans le lecteur 23, pour en lire la mémoire et, le cas échéant, y écrire préalablement les données voulues. Il peut aussi être prévu que le lecteur 23 reçoive d'autres types de mémoires, telles que disques numériques, éventuellement réinscriptibles, ou bandes magnétiques.

Le fonctionnement de l'appareil va maintenant être précisé, en particulier en ce qui concerne l'exploitation de ses deux fonctions, de combiné de radiotéléphonie et de baladeur.

Pour la fonction baladeur, et en l'absence de communication téléphonique, le porteur de l'appareil active, par commande du clavier 12, le lecteur 23 et au besoin commande son adressage en spécifiant une adresse de début de lecture des données en mémoire 24, c'est-à-dire pointe un morceau de musique dans un recueil en mémoire 24. L'afficheur 13 est commandé à cet effet pour fournir un menu des morceaux de musique ou autres en mémoire 24. Des données associées à chaque morceau de musique permettent d'identifier chacun, avec son titre, sa durée, son interprète ou d'autres informations le concernant, et ainsi de le présenter au menu. Le morceau de musique étant choisi, le lecteur 23 fournit alors au microprocesseur 15, à travers le processeur 21, un flux correspondant de données comprimées que le processeur 15 décomprime pour ensuite les transmettre aux CNA 16, 17 de restitution stéréophonique, reliés aux écouteurs 31, 32, le relais 18 étant commandé à cet effet. Une commutation de la restitution sur le haut-parleur 19 est aussi prévue.

Pour enregistrer des données sonores, de la musique ou équivalent, provenant d'un serveur relié au réseau GSM, l'utilisateur appelle le serveur par les circuits radio 14 et commande, par le clavier 12, le processeur 15 pour qu'il transmette à la mémoire 24 les données sonores ainsi reçues en retour. En pareil cas, le processeur 15 assure à la fois le traitement des paquets de données reçues à stocker, transmises au format GSM, et la mise en forme de celles-ci au format prévu pour le stockage. Ce traitement concerne en particulier la réception et la décompression des paquets GSM, de signal sonore numérisé codé et comprimé, mais comportant une redondance pour la sécurité du transport radio. Les données de signal sonore reçues du serveur sont donc d'abord décomprimées par le processeur 15 selon le protocole prévu par le réseau GSM puis ensuite éventuellement comprimées selon un algorithme déterminé pour leur stockage. Cette dernière opération pourrait être omise si le serveur émettait des données déjà comprimées selon un algorithme en mémoire dans l'appareil.

Dans cette exploitation, de réception radio de données sonores, le processeur 15 travaille de façon alternée en partage de temps, avec des tranches de temps entrelacées, pour, alternativement, dépaqueter les données d'un paquet GSM provenant des circuits radio 14 et les transmettre ensuite à la mémoire 24 après compression éventuelle, avant de traiter de même le paquet suivant. A cet effet, les circuits 151 commandent un tel fonctionnement en détectant une activité des circuits radio 14. Cette détection s'effectue par détection de la réception de paquets provenant de ceux-ci ou simplement par surveillance de commandes provenant du microprocesseur 11 et indiquant qu'un appel est lancé par le clavier de numérotation téléphonique 12 ou reçu. Le processeur 15 est ainsi affecté, ici par tranches de temps, aux circuits de radiotéléphonie 11-14. En variante, et dans le cas de la réception de données non comprimées, le processeur 15 reçoit et traite, dans une première phase, tous les paquets d'un morceau de musique et en stocke les données dans la mémoire 24, sans les comprimer. Après la fin de la communication GSM, dans une seconde phase, les données correspondantes sont relues en mémoire 24 et restituées à celle-ci après compression dans le processeur 15. Cette dernière opération est ainsi effectuée en temps différé et le processeur 15 n'a donc à effectuer, en temps réel, que le traitement des paquets lors de la première phase, ce qui évite de devoir le surdimensionner.

Dans le cas de la simple réception ou de l'émission d'un appel téléphonique GSM classique par le porteur de l'appareil, les circuits 151 détectent de même cet état et ils commandent l'affectation à plein temps du processeur 15 aux circuits GSM 11-14. La réception phonique s'effectue par le haut-parleur 19 mais il peut aussi être prévu de commander l'écouteur 31 et éventuellement d'aiguiller le relais 18 sur l'écouteur 32 à la place du haut-parleur 19 de radiotéléphonie.

Les circuits de base de temps 10, qui rythment le fonctionnement des divers circuits, sont en outre programmables depuis le clavier 12 de relation homme-machine pour réaliser une fonction de réveil-matin. Un instant futur déterminé étant sélectionné au clavier 12, les données horaires correspondantes sont mémorisées dans les circuits de base de temps 10 et comparées, cycliquement, à des données d'instant courant pour, en cas de coïncidence, activer le lecteur 23, à travers le microprocesseur 21, et le processeur 15 et ainsi restituer une séquence sonore sur le haut-parleur 19. Le clavier 12 permet en outre, dans tous les cas d'exploitation, de programmer le niveau sonore voulu de restitution, le processeur 15 étant alors commandé pour atténuer ou amplifier les signaux transmis aux CNA 16, 17, ou encore pour modifier le rapport d'équilibrage sonore entre les deux voies (16, 17).

En variante, le processeur de traitement de signaux 15 pourrait être prévu dans le bloc amovible 2, avec éventuellement les CNA 16, 17.

## Revendications

1. Appareil portable comportant
- des moyens de radiotéléphonie cellulaire numérique (11-14),
- des moyens (23) de lecture de moyens mémoires (24), agencés pour en extraire des données numériques comprimées à restituer,
- des moyens (15-18) de traitement de données numériques agencés pour, en partage de temps, traiter les données numériques de radiotéléphonie cellulaire et décomprimer les données numériques lues par les moyens de lecture (23) pour restituer les données numériques.

2. Appareil selon la revendication 1, dans lequel les moyens de traitement (15-18) comportent des moyens (151) de commutation du partage de temps, agencés pour détecter une activité des moyens de radiotéléphonie (11-14) et pour commander en conséquence l'affectation des moyens de traitement (15-18) aux moyens de radiotéléphonie (11-14).

3. Appareil selon l'une des revendications 1 et 2, dans lequel il est prévu des moyens (25) d'accès en écriture aux moyens mémoires (24).

4. Appareil selon l'une des revendications 1 à 3, dans lequel il est prévu un bloc amovible (2) comportant une batterie (20) d'alimentation de l'appareil et les moyens de lecture (23).

5. Appareil selon la revendication 4, dans lequel le bloc amovible (2) comporte un processeur des moyens de traitement (15-18).

6. Appareil selon l'une des revendications 1 à 5, dans lequel les moyens de lecture (23) sont agencés pour recevoir des moyens mémoires amovibles (24).

7. Appareil selon l'une des revendications 1 à 6, dans lequel il est prévu des moyens d'horloge programmables (10) agencés pour, sous la commande de moyens de relation homme-machine (12), activer les moyens de lecture (23) et les moyens de traitement (15-18) à un instant déterminé.

8. Appareil selon l'une des revendications 1 à 7, dans lequel il est prévu des moyens d'aiguillage (18) pour aiguiller une sortie des moyens de traitement (17) vers un haut-parleur de radiotéléphonie (19) et vers un écouteur personnel (32).

9. Appareil selon l'une des revendications 1 à 8, dans lequel il est prévu des moyens d'affichage (13) et des moyens (11) de commande des moyens d'affichage (13).

10. Appareil selon l'une des revendications 1 à 8, dans lequel il est prévu un clavier (12) de numérotation téléphonique et de commande d'adressage des moyens de lecture (23).

## Claims

1. A portable apparatus including
- digital cellular radiotelephony means (11-14),
- means (23) for reading memory means (24), arranged to extract compressed digital data to be reproduced therefrom,
- means (15-18) for processing digital data arranged for, in a time sharing manner, processing the cellular radiotelephony digital data and decompressing the digital data read by the reading means (23) to reproduce the digital data.

2. The apparatus according to claim 1, wherein the processing means (15-18) include means (151) for switching time sharing, arranged to detect an activity of the radiotelephony means (11-14) and to control accordingly the assignment of the processing means (15-18) to the radiotelephony means (11-14).

3. The apparatus according to one of claims 1 and 2, wherein means (25) for writing memory means (24) are provided.

4. The apparatus according to one of claims 1 to 3, wherein a removable unit (2) including a battery (20) for powering the apparatus and the reading means (23) is provided.

5. The apparatus according to claim 4, wherein the removable unit (2) includes a processor of the processing means (15-18).

6. The apparatus according to one of claims 1 to 5, wherein the reading means (23) are arranged to receive the removable memory means (24).

7. The apparatus according to one of claims 1 to 6, wherein programmable clock means (10) arranged to, under the control of man-machine interfacing means (12), activate the reading means (23) and the processing means (15-18) at a predetermined time are provided.

8. The apparatus according to one of claims 1 to 7, wherein directing means (18) for directing an output of the processing means (17) towards a radiotelephony speaker (19) and a personal earphone (32) are provided.

9. The apparatus according to one of claims 1 to 8, wherein displaying means (13) and means (11) for controlling the displaying means (13) are provided.

10. The apparatus according to one of claims 1 to 8, wherein a keypad (12) for phone dialling and address controlling the reading means (23) is provided.

## Patentansprüche

1. Tragbares Gerät, umfassend
- digitale zellulare Funksprechmittel (11-14),
- Mittel (23) zum Lesen von Speichermitteln (24), die angeordnet sind, um daraus wiederherzustellende komprimierte digitale Daten zu entnehmen,
- Mittel (15-18) zum Verarbeiten von digitalen Daten, die angeordnet sind, um im Teilnehmerbetrieb die digitalen zellularen Funksprechdaten zu verarbeiten und die durch die Lesemittel (23) gelesenen digitalen Daten zu dekomprimieren, um die digitalen Daten wiederherzustellen.

2. Gerät nach Anspruch 1, wobei die Verarbeitungsmittel (15-18) Mittel (151) zum Umschalten des Teilnehmerbetriebs umfassen, die angeordnet sind, um eine Aktivität der Funksprechmittel (11-14) zu ermitteln und um dementsprechend die Zuordnung der Verarbeitungsmittel (15-18) zu den Funksprechmitteln (11-14) zu steuern.

3. Gerät nach einem der Ansprüche 1 und 2, wobei Mittel (25) zum Schreibzugreifen auf die Speichermittel (24) bereitgestellt werden.

4. Gerät nach einem der Ansprüche 1 bis 3, wobei ein abnehmbarer Block (2) bereitgestellt wird, der eine Batterie (20) zum Versorgen des Geräts und der Lesemittel (23) umfasst.

5. Gerät nach Anspruch 4, wobei der abnehmbare Block (2) einen Prozessor der Verarbeitungsmittel (15-18) umfasst.

6. Gerät nach einem der Ansprüche 1 bis 5, wobei die Lesemittel (23) angeordnet sind, um abnehmbare Speichermittel (24) aufzunehmen.

7. Gerät nach einem der Ansprüche 1 bis 6, wobei programmierbare Taktgebermittel (10) bereitgestellt werden, die angeordnet sind, um unter der Steuerung von Mitteln für eine Mensch-Maschine-Beziehung (12) die Lesemittel (23) und die Verarbeitungsmittel (15-18) zu einem bestimmten Zeitpunkt zu aktivieren.

8. Gerät nach einem der Ansprüche 1 bis 7, wobei Verteilermittel (18) bereitgestellt werden, um eine Ausgabe der Verarbeitungsmittel (17) an einen Funksprechlautsprecher (19) und an einen persönlichen Kopfhörer (32) zu verteilen.

9. Gerät nach einem der Ansprüche 1 bis 8, wobei Anzeigemittel (13) und Mittel (11) zum Steuern der Anzeigemittel (13) bereitgestellt werden.

10. Gerät nach einem der Ansprüche 1 bis 8, wobei eine Tastatur (12) zum Telefonwählen und zum Adressensteuern der Lesemittel (23) bereitgestellt wird.
